# EUROPEAN PATENT APPLICATION

(11) **EP 4 563 466 A1**
(43) Date of publication of application: **04.06.2025**
(21) Application number: 24215823.6
(22) Date of filing: 27.11.2024
(51) Int. Cl.: B64C 7/02, B64D 15/02, B64D 15/04, B64D 29/02

(54) **COMBINED NACELLE ANTI-ICE AND WING ANTI-ICE SYTEM**

(30) Priority: 01.12.2023 US 202318525925
(71) Applicant: RTX Corporation, Farmington, CT 06032 (US)
(72) Inventor: PAPA, Federico, Port Saint Lucie, 34983 (US); MERCIER, Claude, Vernon, 06066 (US); YAZICI, Murat, Glastonbury, 06033 (US)
(74) Representative: Schmitt-Nilson Schraud Waibel Wohlfrom Patentanwälte Partnerschaft mbB

(57) **Abstract**

A combined nacelle anti-ice and wing anti-ice system including a nacelle in operative communication with an engine static structure; a wing in operative communication with the nacelle; an air bleed tap fluidly coupled to the engine static structure; an inlet fluidly coupled to the air bleed tap; anti-ice ducting fluidly coupled to the inlet; an anti-ice valve fluidly coupled to the anti-ice ducting; a nacelle anti-ice discharge fluidly coupled to the anti-ice ducting downstream from the anti-ice valve; and a wing anti-ice discharge fluidly coupled to the anti-ice ducting downstream from the anti-ice valve.

## Description

The present disclosure is directed to an improved anti-ice system that combines the anti-ice function for the nacelle and the wing locations.

A gas turbine engine generally includes a turbomachine and a rotor assembly. Gas turbine engines, such as turbofan engines, may be used for aircraft propulsion. In the case of a turbofan engine, the rotor assembly may be configured as a fan assembly.

Typically, gas turbine engines incorporate the use of one or more thermal management systems to control thermal energy of various fluids passing through the various components of the engine. The thermally managed fluids can then be utilized by the engine or by other portions of the aircraft, such as an environmental control system, an auxiliary power unit, or an air cycle machine.

Compressed air can be tapped at a high pressure location near the combustor for auxiliary uses, such as environmental control of the aircraft. However, this high pressure air can be hotter than can safely be supported by ductwork and delivery to the aircraft. A pre-cooler or heat exchanger is used to cool high-temperature engine bleed air and can be located near the engine such that excessively hot air is not ducted through the wing of the aircraft for safety reasons.

In accordance with the present disclosure, there is provided a combined nacelle anti-ice and wing anti-ice system comprising a nacelle in operative communication with an engine static structure; a wing in operative communication with the nacelle; an air bleed tap fluidly coupled to the engine static structure; an inlet fluidly coupled to the air bleed tap; anti-ice ducting fluidly coupled to the inlet; an anti-ice valve fluidly coupled to the anti-ice ducting; a nacelle anti-ice discharge fluidly coupled to the anti-ice ducting downstream from the anti-ice valve; and a wing anti-ice discharge fluidly coupled to the anti-ice ducting downstream from the anti-ice valve.

Particular embodiments further may include at least one, or a plurality of, the following optional features, alone or in combination with each other:

A further embodiment of any of the foregoing embodiments may additionally and/or alternatively include the anti-ice ducting fluidly couples hot gases to the nacelle anti-ice discharge and the wing anti-ice discharge configured to prevent ice formation on the nacelle and the wing.

A further embodiment of any of the foregoing embodiments may additionally and/or alternatively include the combined nacelle anti-ice and wing anti-ice system further comprising a controller in operative communication with the anti-ice valve, the controller configured to control flow of the hot gases from the air bleed tap to the nacelle and the wing.

A further embodiment of any of the foregoing embodiments may additionally and/or alternatively include the combined nacelle anti-ice and wing anti-ice system further comprising a control valve located near a junction in the anti-ice ducting; the junction configured to divide the flow of hot gases to each of the nacelle anti-ice discharge and the wing anti-ice discharge.

A further embodiment of any of the foregoing embodiments may additionally and/or alternatively include the control valve being configured to control a flow of the hot gases to at least one of the nacelle anti-ice discharge and the wing anti-ice discharge.

A further embodiment of any of the foregoing embodiments may additionally and/or alternatively include the combined nacelle anti-ice and wing anti-ice system further comprising an environmental control system engine bleed port fluidly coupled to the engine static structure separate and apart from the air bleed tap, wherein the environmental control system engine bleed port is fluidly coupled to an environmental control system bleed air cabin supply through an ECS precooler separately from the combined nacelle anti-ice and wing anti-ice system.

In accordance with the present disclosure, there is provided a gas turbine engine with a combined nacelle anti-ice and wing anti-ice system comprising the gas turbine engine comprising a fan section in operative communication with a compressor section a combustor section and a turbine section within an engine static structure; a nacelle coupled to the engine static structure; a wing supporting the nacelle; an air bleed tap fluidly coupled to the engine static structure; an inlet fluidly coupled to the air bleed tap; an anti-ice ducting fluidly coupled to the inlet; an anti-ice valve fluidly coupled to the anti-ice ducting; a nacelle anti-ice discharge within the nacelle and fluidly coupled to the anti-ice ducting downstream from the anti-ice valve; and a wing anti-ice discharge within the wing and fluidly coupled to the anti-ice ducting downstream from the anti-ice valve.

Particular embodiments further may include at least one, or a plurality of, the following optional features, alone or in combination with each other:

A further embodiment of any of the foregoing embodiments may additionally and/or alternatively include the anti-ice ducting fluidly couples hot gases to the nacelle anti-ice discharge and the wing anti-ice discharge configured to prevent ice formation on the nacelle and the wing.

A further embodiment of any of the foregoing embodiments may additionally and/or alternatively include the gas turbine engine with a combined nacelle anti-ice and wing anti-ice system further comprising a controller in operative communication with the anti-ice valve, the controller configured to control flow of the hot gases from the air bleed tap to the nacelle and the wing.

A further embodiment of any of the foregoing embodiments may additionally and/or alternatively include the gas turbine engine with a combined nacelle anti-ice and wing anti-ice system further comprising a control valve located near a junction in the anti-ice ducting; the junction configured to divide the flow of hot gases to each of the nacelle anti-ice discharge and the wing anti-ice discharge.

A further embodiment of any of the foregoing embodiments may additionally and/or alternatively include the control valve being configured to control a flow of the hot gases to at least one of the nacelle anti-ice discharge and the wing anti-ice discharge.

A further embodiment of any of the foregoing embodiments may additionally and/or alternatively include the gas turbine engine with a combined nacelle anti-ice and wing anti-ice system further comprising an environmental control system engine bleed port fluidly coupled to the engine static structure separate and apart from the air bleed tap, wherein the environmental control system engine bleed port is fluidly coupled an environmental control system bleed air cabin supply through an ECS precooler separately from the combined nacelle anti-ice and wing anti-ice system.

In accordance with the present disclosure, there is provided a process for de-icing employing a combined nacelle anti-ice and wing anti-ice system comprising coupling a nacelle in operative communication with an engine static structure; coupling a wing in operative communication with the nacelle; fluidly coupling an air bleed tap to the engine static structure; fluidly coupling an inlet to the air bleed tap; fluidly coupling anti-ice ducting to the inlet; fluidly coupling an anti-ice valve to the anti-ice ducting; fluidly coupling a nacelle anti-ice discharge to the anti-ice ducting downstream from the anti-ice valve; and fluidly coupling a wing anti-ice discharge to the anti-ice ducting downstream from the anti-ice valve.

Particular embodiments further may include at least one, or a plurality of, the following optional features, alone or in combination with each other:

A further embodiment of any of the foregoing embodiments may additionally and/or alternatively include the process further comprising fluidly coupling hot gases through the anti-ice ducting to the nacelle anti-ice discharge and the wing anti-ice discharge; and preventing ice formation on the nacelle and the wing.

A further embodiment of any of the foregoing embodiments may additionally and/or alternatively include the process further comprising placing a controller in operative communication with the anti-ice valve; and configuring the controller to control flow of the hot gases from the air bleed tap to the nacelle and the wing.

A further embodiment of any of the foregoing embodiments may additionally and/or alternatively include the process further comprising configuring the control valve to control a flow of the hot gases to at least one of the nacelle anti-ice discharge and the wing anti-ice discharge.

A further embodiment of any of the foregoing embodiments may additionally and/or alternatively include the process further comprising fluidly coupling an environmental control system engine bleed port to the engine static structure separate and apart from the air bleed tap; and fluidly coupling the environmental control system engine bleed port to an environmental control system bleed air cabin supply through an ECS precooler separately from the combined nacelle anti-ice and wing anti-ice system.

A further embodiment of any of the foregoing embodiments may additionally and/or alternatively include the process further comprising separating the environmental control system bleed air cabin supply from the wing anti-ice discharge; and providing predetermined air temperatures utilized for the wing anti-ice discharge on the wings greater than the predetermined air temperature of the environmental control system bleed air cabin supply.

A further embodiment of any of the foregoing embodiments may additionally and/or alternatively include the process further comprising reducing up to 50% of required fan air utilized to cool the ECS precooler.

A further embodiment of any of the foregoing embodiments may additionally and/or alternatively include.

A further embodiment of any of the foregoing embodiments may additionally and/or alternatively include the process further comprising opening the control valve during engine start-up in order to facilitate high pressure compressor acceleration through the start cycle.

A further embodiment of any of the foregoing embodiments may additionally and/or alternatively include the process further comprising opening the control valve during engine transient operation in order to facilitate high pressure compressor acceleration or deceleration.

Other details of the combined nacelle anti-ice and wing anti-ice system are set forth in the following detailed description and the accompanying drawings wherein like reference numerals depict like elements.
Fig. 1 is a cross section view of an exemplary gas turbine engine.
Fig. 2 is a schematic representation of an exemplary combined nacelle anti-ice and wing anti-ice system.

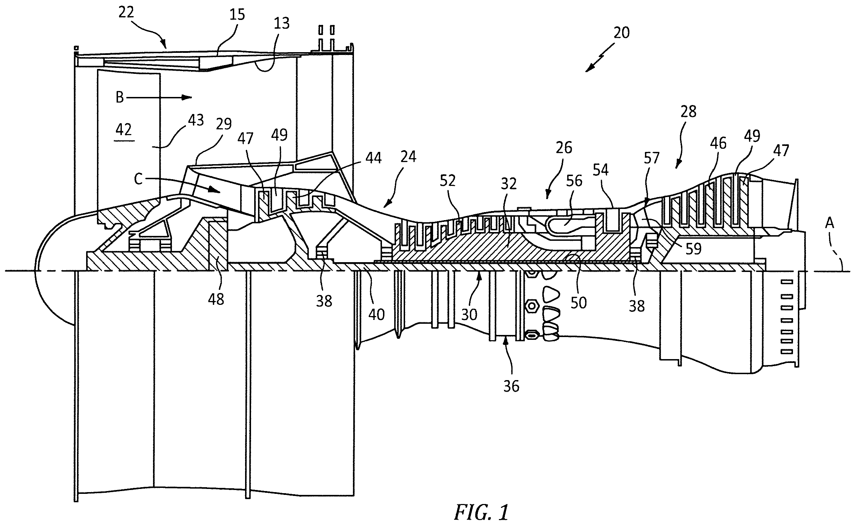

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

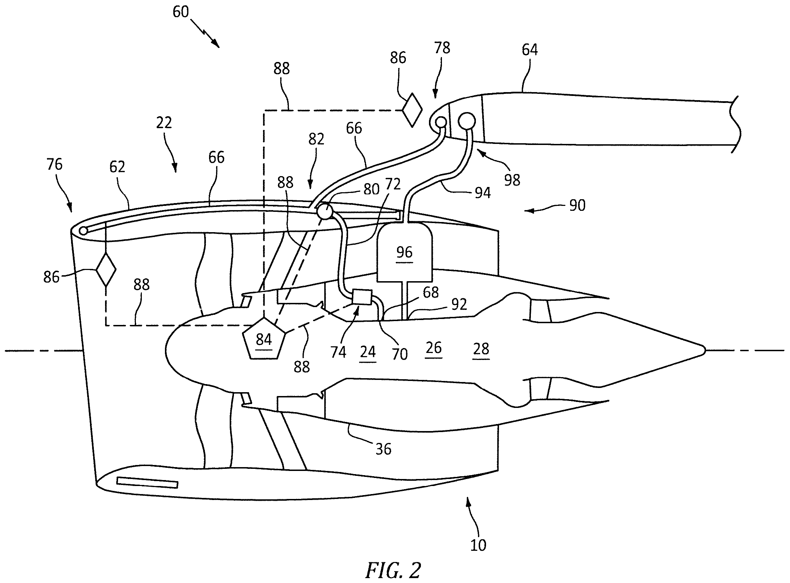

Referring also to Fig. 2 the combined nacelle anti-ice and wing anti-ice system 60 is shown. An exemplary gas turbine engine 10 is shown with the fan section 22, compressor section 24, combustor section 26 and turbine section 28. A nacelle 62 is coupled to the engine static structure 36. A wing 64 can support the nacelle 62 as part of the overall aircraft design. Portions of the wing 64 and the nacelle 62 are prone to ice formation during certain environmental conditions.

The combined nacelle anti-ice and wing anti-ice system 60 is configured to provide hot gases 66 to the portions of the wing 64 and the nacelle 62 to prevent the conditions that allow ice formation. The combined nacelle anti-ice and wing anti-ice system 60 includes an inlet 68 that can be located proximate an air bleed tap 70. The air bleed tap 70 can be located proximate the mid stage of the high pressure compressor in an exemplary embodiment. The air bleed tap 70 can feed the inlet 68 and flow the hot gasses 66 through anti-ice ducting 72 through an anti-ice valve 74. The anti-ice ducting 72 can supply the hot gasses 66 to both a nacelle anti-ice discharge 76 and a wing anti-ice discharge 78 configured to prevent ice formation. The anti-ice ducting 72 can be a double wall configuration; that is an inner tube wall surrounded by an outer tube wall with a space between the inner tube wall and outer tube wall. The double wall configuration can insulate the hot gases and protect components proximate the ducting. The double wall ducting requires less valve control.

In an alternative embodiment, the anti-ice ducting 72 can include a control valve 80 located near a junction 82 in the anti-ice ducting 72 that divides the flow of hot gases 66 to each of the nacelle anti-ice discharge 76 and the wing anti-ice discharge 78. The control valve 80 can be configured to control the flow of the hot gases 66 to either or both of the nacelle anti-ice discharge 76 and the wing anti-ice discharge 78.

The anti-ice valve 74 is in operative communication with a controller 84. The controller 84 may include hardware, firmware, and/or software components that are configured to perform the functions disclosed herein, including the functions of the combined nacelle anti-ice and wing anti-ice system 60. While not specifically shown, the controller 84 may include other computing devices (e.g., servers, mobile computing devices, etc.) and computer systems which may be in communication with each other and/or the controller 84 via a communication network to perform one or more of the disclosed functions. The controller 84 may include at least one processor (e.g., a controller, microprocessor, microcontroller, digital signal processor, etc.), memory, and an input/output (I/O) subsystem. The controller 84 may be embodied as any type of computing device e.g., a server, an enterprise computer system, a network of computers, a combination of computers and other electronic devices, or other electronic devices.

The controller 84 can be in operative communication with sensors 86, such as a temperature sensor and/or pressure sensor. The controller 84 can provide control signals 88 to the anti-ice valve 74 and/or control valve 80 in operation to adjust the anti-ice valve 74 and/or control valve 74 position responsive to bleed air 66 temperature and pressure.

The combined nacelle anti-ice and wing anti-ice system 60 can influence an environmental control system (ECS) 90 configuration. The environmental control system 90 can include an environmental control system engine bleed port 92 that feeds ECS bleed air 94 through an ECS precooler 96. The engine bleed port 92 can be located at the low stage (referred to as low pressure port) of the high pressure compressor and the compressor discharge (referred to as high pressure port). Port locations can be defined by pressure requirements of the airframe as well as compressor mechanical configuration. The ECS precooler 96 can be sized with less cooling area and thus less weight and volume as a result of the reduced temperatures of the ECS bleed air 94 taken from the ECS engine bleed port 92. In an exemplary embodiment, the benefit of the precooler 96 being resized can include reducing up to 50% of required fan air utilized to cool the environmental control system bleed air 94 flow through the ECS precooler 96. The ECS bleed air 94 can be supplied to the ECS system cabin bleed air supply 98. The cabin bleed air supply 98 has a predetermined flow rate that can be reduced by decoupling the cabin bleed air supply 98 from the wing anti-ice discharge 78. Separating the cabin bleed air supply 98 from the wing anti-ice discharge 78 allows for hotter air to be used for the wing anti-ice discharge 78 on the wings.

In an exemplary embodiment, anti-ice valve 74 and the control valve 80 can be employed during an engine start up condition. By opening the anti-ice valve 74 and the control valve 80 during engine start-up, one can facilitate high pressure compressor acceleration through the start cycle. The anti-ice valve 74 and the control valve 80 can also be employed during engine transient conditions. Opening anti-ice valve 74 and the control valve 80 during engine transient operation enables high pressure compressor acceleration or deceleration.

A technical advantage of the disclosed combined nacelle anti-ice and wing anti-ice system can include a reduction in the number of valves required to operate the anti-ice systems.

Another technical advantage of the disclosed combined nacelle anti-ice and wing anti-ice system can include a reduction in the size of the ECS ducts.

Another technical advantage of the disclosed combined nacelle anti-ice and wing anti-ice system can include a performance benefit by using a lower source pressure for the wing anti-ice system.

Another technical advantage of the disclosed combined nacelle anti-ice and wing anti-ice system can include a reduction in the size of the ECS precooler providing a performance benefit and weight reduction benefit.

There has been provided a combined nacelle anti-ice and wing anti-ice system. While the combined nacelle anti-ice and wing anti-ice system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A combined nacelle anti-ice and wing anti-ice system comprising:
a nacelle in operative communication with an engine static structure;
a wing in operative communication with the nacelle;
an air bleed tap fluidly coupled to the engine static structure;
an inlet fluidly coupled to the air bleed tap;
anti-ice ducting fluidly coupled to the inlet;
an anti-ice valve fluidly coupled to the anti-ice ducting;
a nacelle anti-ice discharge fluidly coupled to the anti-ice ducting downstream from the anti-ice valve; and
a wing anti-ice discharge fluidly coupled to the anti-ice ducting downstream from the anti-ice valve.

2. The combined nacelle anti-ice and wing anti-ice system according to claim 1, wherein the anti-ice ducting fluidly couples hot gases to the nacelle anti-ice discharge and the wing anti-ice discharge configured to prevent ice formation on the nacelle and the wing.

3. The combined nacelle anti-ice and wing anti-ice system according to claim 1 or 2, further comprising:
a controller in operative communication with the anti-ice valve, the controller configured to control flow of the hot gases from the air bleed tap to the nacelle and the wing.

4. The combined nacelle anti-ice and wing anti-ice system according to any of claims 1 to 3, further comprising:
a control valve located near a junction in the anti-ice ducting; the junction configured to divide the flow of hot gases to each of the nacelle anti-ice discharge and the wing anti-ice discharge.

5. The combined nacelle anti-ice and wing anti-ice system according to claim 4, wherein the control valve being configured to control a flow of the hot gases to at least one of the nacelle anti-ice discharge and the wing anti-ice discharge.

6. The combined nacelle anti-ice and wing anti-ice system according to any of claims 1 to 5, further comprising:
an environmental control system engine bleed port fluidly coupled to the engine static structure separate and apart from the air bleed tap, wherein the environmental control system engine bleed port is fluidly coupled to an environmental control system bleed air cabin supply through an ECS precooler separately from the combined nacelle anti-ice and wing anti-ice system.

7. A gas turbine engine with a combined nacelle anti-ice and wing anti-ice system according to any of claims 1 to 6, wherein:
the gas turbine engine comprises a fan section in operative communication with a compressor section a combustor section and a turbine section within an engine static structure;
the nacelle is coupled to the engine static structure;
the wing supports the nacelle;
the nacelle anti-ice discharge is provided within the nacelle; and
the wing anti-ice discharge is provided within the wing.

8. A process for de-icing employing a combined nacelle anti-ice and wing anti-ice system comprising:
coupling a nacelle in operative communication with an engine static structure;
coupling a wing in operative communication with the nacelle;
fluidly coupling an air bleed tap to the engine static structure;
fluidly coupling an inlet to the air bleed tap;
fluidly coupling anti-ice ducting to the inlet;
fluidly coupling an anti-ice valve to the anti-ice ducting;
fluidly coupling a nacelle anti-ice discharge to the anti-ice ducting downstream from the anti-ice valve; and
fluidly coupling a wing anti-ice discharge to the anti-ice ducting downstream from the anti-ice valve.

9. The process of claim 8, further comprising:
fluidly coupling hot gases through the anti-ice ducting to the nacelle anti-ice discharge and the wing anti-ice discharge; and
preventing ice formation on the nacelle and the wing.

10. The process of claim 8 or 9, further comprising:
placing a controller in operative communication with the anti-ice valve; and
configuring the controller to control flow of the hot gases from the air bleed tap to the nacelle and the wing.

11. The process of any of claims 8 to 10, further comprising:
configuring the control valve to control a flow of the hot gases to at least one of the nacelle anti-ice discharge and the wing anti-ice discharge.

12. The process of any of claims 8 to 11, further comprising:
fluidly coupling an environmental control system engine bleed port to the engine static structure separate and apart from the air bleed tap; and
fluidly coupling the environmental control system engine bleed port to an environmental control system bleed air cabin supply through an ECS precooler separately from the combined nacelle anti-ice and wing anti-ice system.

13. The process of claim 12, further comprising:
separating the environmental control system bleed air cabin supply from the wing anti-ice discharge; and
providing predetermined air temperatures utilized for the wing anti-ice discharge on the wings greater than the predetermined air temperature of the environmental control system bleed air cabin supply.

14. The process of claim 13, further comprising:
reducing up to 50% of required fan air utilized to cool the ECS precooler.

15. The process of any of claims 8 to 14, further comprising:
opening the control valve during engine start-up in order to facilitate high pressure compressor acceleration through the start cycle; and/or
opening the control valve during engine transient operation in order to facilitate high pressure compressor acceleration or deceleration.
